# EUROPEAN PATENT APPLICATION

(11) **EP 4 345 551 A1**
(43) Date of publication of application: **03.04.2024**
(21) Application number: 22198803.3
(22) Date of filing: 29.09.2022
(51) Int. Cl.: G05B 19/05, G05B 23/02, G06F 3/048

(54) **SYSTEM AND METHOD FOR PROGRAMMING AND CONTROLLING OF A MODULAR INDUSTRIAL AUTOMATION ARRANGEMENT**

(71) Applicant: Siemens Aktiengesellschaft, 80333 München (DE)
(72) Inventor: Dallmann, Michael, 90530 Wendelstein (DE); Kollinger, David, 90552 Röthenbach a.d. Pegnitz (DE); Cajlan, Sinisa, 50670 Köln (DE); Edenharter, Johannes, 90584 Allersberg (DE); Kabel, Oliver, 64760 Oberzent (DE); Langer, Gerhard, 91052 Erlangen (DE); Schumacher, Michael, 52428 Jülich (DE); Sistig, Christian, 52351 Düren (DE)
(74) Representative: Siemens Patent Attorneys

(57) **Abstract**

The invention relates to a system and a method for programming and controlling of a modular industrial automation arrangement. Each automation module is controlled and monitored by a software service (A, B), each software service (A, B) having a first communication interface to a data connection to an automation module for exchanging sensor and actor data, and providing control software with functions for controlling the automation task. Each software service (A, B) also provides or describes at least one dialog element (1, 2) for user interaction, at least one of the functions being communicatively connected with the at least one dialog element. Each software service (A, B) has or accesses its own assigned data repository, each software service (A, B) having a second interface for exchanging data and for accessing or triggering of internal functions or service with others of the software service (A, B)s, each software service (A, B) being deployed on the computing device, the device having an administration service being set-up for controlling of the execution of the software services (A, B) in the execution environment, and the computing device providing a graphical user interface, the graphical user interface integrating some or all dialog elements (1, 2) of the multiple software services (A, B) in one or multiple common views, frames, or screens (3). This system has the advantage that it allows to make use of stand-alone applications in application suites which can be extended step by step. Within the suite existing graphical user interfaces can be reused and combined in a central navigation. Furthermore services/applications can be added without the need to restart central servers. Each service can have a database of its own.

## Description

The invention covers several problems which arise to create and manage industrial software. Up to now most software applications for industrial purposes have to be installed and managed on site. Special interfaces (e.g. the use of central databases like Teamcenter or special communication protocols between applications) are used to exchange data between different systems. Currently manufacturer of industrial software are going to make use of cloud based systems step by step. Based on application stores, software for different purposes will be offered (e.g. to support anomaly detection or to calculate and observe KPIs). Mostly these applications cover certain aspects of plants and work more or less independently of each other. There is no possibility to combine such applications to an overall software solution for engineering and/or runtime tasks which could manage plants in a simple way. Only functions which are provided by the cloud infrastructure like a file exchange or a user management can currently be used in a common way. This problem will get more and more evident in case of using edge applications which are related to devices. Today, it is unlikely that different devices of a plant support the same type of apps (e.g. process monitoring apps for 3D printer).

A further problem is the high complexity of industrial software to engineer and operate plants. In general, software applications for automation purposes like MES systems for runtime tasks or engineering tools for PLCs are getting more and more complex and difficult to enhance to integrate new technologies, e.g. to support special tasks for additive manufacturing or to make use of AI based systems. There are several major problems:
a) For engineering tools mostly central and complex databases are used. In this case several tools make use of such a database and record engineering data. Extensions to these databases have to take care about compatibility issues and performance aspects. For large applications, several departments have to be coordinated to update such a suite.
b) For runtime tools (e.g. SCADA, MES systems, etc.) a variety of different tasks have to be managed like operator guidance, material management, scheduling, transport of intermediate good, etc. Often a central database is used which leads to similar problems as before. In addition, such systems would benefit from a direct interaction with manufacturing devices and software provided by the device manufacturer but mostly only some data will be exchanged due to the lack of standards. Functions and graphical user interfaces cannot be reused in such systems. A reimplementation would result in high efforts and often such functions are IP protected by the device manufacturer.
c) To make use of new technologies, manufacturer need systems which provide a simple and cost-effective solution to manage such a technology and to learn about opportunities and risks. For example, a manufacturer in the discrete industry who wants to make use of additive manufacturing will buy only one or two machines in the beginning. Later, if such a technology seems to be promising, he will invest in more machines and infrastructure. It is expected by the end-customer that a solution to operate one or two machines could be enhanced to run a variety of machines later on with additional functions, e.g. to observe quality issues, optimize OEEs, etc. But solutions to run large plants are mostly very complex and need to be adapted to end-customers which means that they will not provide a cost-effective solution for beginners in such technologies. On the other hand, systems which are optimized for a technology could provide such a solution, but it is more difficult to enhance such a solution to manage complex tasks.

For addressing these problems, the market demands the use of independent cloud-based applications to observe and manage plants. Often communication interfaces shall be used to exchange data between applications (e.g. to manage notifications). But in these scenarios the different applications have to check if partner applications are installed and available. Such a procedure could get very complex in case of using a variety of applications.

Another option would be the use of iframes to integrate graphical user interfaces from apps into other applications. But the use of iframes does not provide any syntactic or semantic information. Let us assume we would use an app to manage production orders and another to detect anomalies during the operation of devices. If we select a production order in the first app and we want to look at anomalies in device operations associated to this order in the other app, we have to identify the associated devices in one app and for each device we have to enter the devices and to search for associated anomalies in the other application.

In regard of high complexity of industrial software to engineer and operate plants we see that mostly complex software suites are modularized internally. Functions are provided by services or integrated libraries but mostly these services cannot run stand-alone and cannot be reused in the context of other suites. The graphical user interface (GUI) for such modules or services is mostly part of the overall GUI of the suite.

In addition, such applications make use of established standards for data exchange to devices and external applications for integration tasks. The use of standards allows to separate application modules and the data repository to a certain degree. Unfortunately, the use of standards has been limited in most cases to avoid that data could be reused by external software companies' products.

It is a task for the instant invention to solve these problems, in particular to provide an optimized system and a method for programming and controlling of a modular industrial automation arrangement.

The invention solves this task with a new generic software approach which allows to provide and combine (distributed) services to suites - so called software services -, which combine not only functionalities of services but also the graphical user interfaces of such services. Each service could run stand-alone with a graphical user interface of its own and can be integrated into a master service (the application suite). The master service provides a generic navigation to the different services based on objects managed by the services. This allows the reuse of functions from services in a much broader and easier way than in classical solutions, which cannot reuse graphical user interfaces. The system is designed in such a way that end-customers which are not familiar with programming tasks can easily define new dialogs based on the provided functions and dialog elements from the services. The generic software allows to run services on site based in industrial PCs or edges or based on (industrial) cloud infrastructures. It can also be used for non-industrial purposes.

In particular, the task is solved by a system according to claim 1 and by a method according to claim 9.

The solution comprises a system for programming and controlling of a modular industrial automation arrangement, the industrial automation arrangement comprising multiple automation modules, each module fulfilling an automation task, the automation arrangement comprising at least one computing device for controlling and monitoring of the automation arrangement. The system is characterized in, that each automation module being controlled and monitored by a software service, each software service having a first communication interface to a data connection to that automation module for exchanging sensor and actor data, each software service providing control software with functions for controlling the automation task, each software service also providing or describing at least one dialog element for user interaction, at least one of the functions being communicatively connected with the at least one dialog element, each software service having or accessing its own assigned data repository, each software service having a second interface for exchanging data and for accessing or triggering of internal functions or service with others of the software services, each software service being deployed on the computing device, the computing device having an execution environment for execution of the software service, the system having an administration service being set-up for controlling of the execution of the software services in the execution environment, and the computing device providing a graphical user interface, the graphical user interface integrating some or all dialog elements of the multiple software services in one or multiple common views, frames, or screens. This system has the advantage that it allows to make use of stand-alone applications in application suites which can be extended step by step. Within the suite existing graphical user interfaces can be reused and combined in a central navigation. Furthermore services/applications can be added without the need to restart central servers. Each service can have a database of its own.

The task is also solved by a method for programming and controlling of a modular industrial automation arrangement, the industrial automation arrangement comprising multiple automation modules, each module fulfilling an automation task, the automation arrangement comprising at least one computing device for controlling and monitoring of the automation arrangement. The method comprises that each automation module is controlled and monitored by a software service, each software service exchanging, via a first communication interface to a data connection to that automation module, sensor and actor data, each software service provides control software with functions for controlling the automation task, each software service also provides or describes at least one dialog element for user interaction, at least one of the functions being communicatively connected with the at least one dialog element, each software service has or accesses its own assigned data repository, each software service employs a second interface exchanging data and accessing or triggering of internal functions or service with others of the software services, each software service is deployed on the computing device, the computing device employing an execution environment for execution of the software service, the system employing an administration service being set-up for controlling of the execution of the software services in the execution environment, and the computing device provides a graphical user interface, the graphical user interface integrating some or all dialog elements of the multiple software services in one or multiple common views, frames, or screens. This method provides the advantages as discussed for the inventive system.

Advantageous embodiments of the system are provided in the dependent claims. The shown features and advantages do also apply for the method in an analog way. Features of several dependent claims can be used standalone and/or in senseful combination.

In an embodiment, the administration service has first editing functions, the first editing functions assisting in editing the connection between interfaces of the software services and between the interfaces and external data connections. With this, it is possible to extend or reconfigure the system locally, even at runtime.

Advantageously, the graphical user interface has second editing functions, the second editing functions assisting in combining and editing dialog functions of the loaded software services in the common views, frames, or screens. By this, the user interface can be set up to current needs and reflecting the actual functionality of the system.

In an embodiment, the computing device is an industrial edge device. Edge devices are common to modern industrial automation environments and provide access to shopfloor and cloud networks so that the system may exchange data with both.

Advantageously, the computing device is a cloud-based execution environment, the cloud-based execution environment having at least one data connection to the automation modules and at least one data connection to a displaying device for displaying the one or multiple common views, frames, or screens. This allows flexible deployment of the system on virtually unlimited computing resources.

In an advantageous embodiment, the computing device has or is connected to a webserver for providing the one or multiple common views, frames, or screens displaying device, and that the displaying device comprises a browsing software connected to that webserver. By this, one can make use of common web-based tools and nearly every common device, e.g. personal computers or mobile devices, can be used for providing the user interface of the system.

An easy way for enhancing the system with functionality is given if the administration service is set-up for providing access to at least one repository with multiple packages with software services and being set-up for selecting, loading, combining, and for establishing data access and transfer between the second interfaces of the software services.

In an embodiment, the system provides a master service, the master service being set-up for establishing and controlling of a workflow through the software services in the runtime environment, the workflow reflecting a production sequence in the industrial automation arrangement. With that master device, standalone-applications and services can be combined and be used in a collaborative way.

Examples for an inventive system are described by use if the figures. These examples also illustrate examples for the inventive method.

### In the drawings,

- Fig. 1: illustrates combining dialog frames from two services,
- Fig. 2: shows the principle of showing or hiding f UI elements,
- Fig. 3: illustrates the use of referenced attributes,
- Fig. 4: explains the principle of triggering events to highlight objects in different frames,
- Fig. 5: shows an example for structuring of a repository elements,
- Fig. 6: illustrates an example for a navigation entry of the system's UI,
- Fig. 7: explains the use of repositories for application suites,
- Fig. 8: explains the principle of managing object relations between services,
- Fig. 9: illustrates relations between services, and
- Fig. 10: explains the generic navigation in orders and for defining relations in pop-up menus.

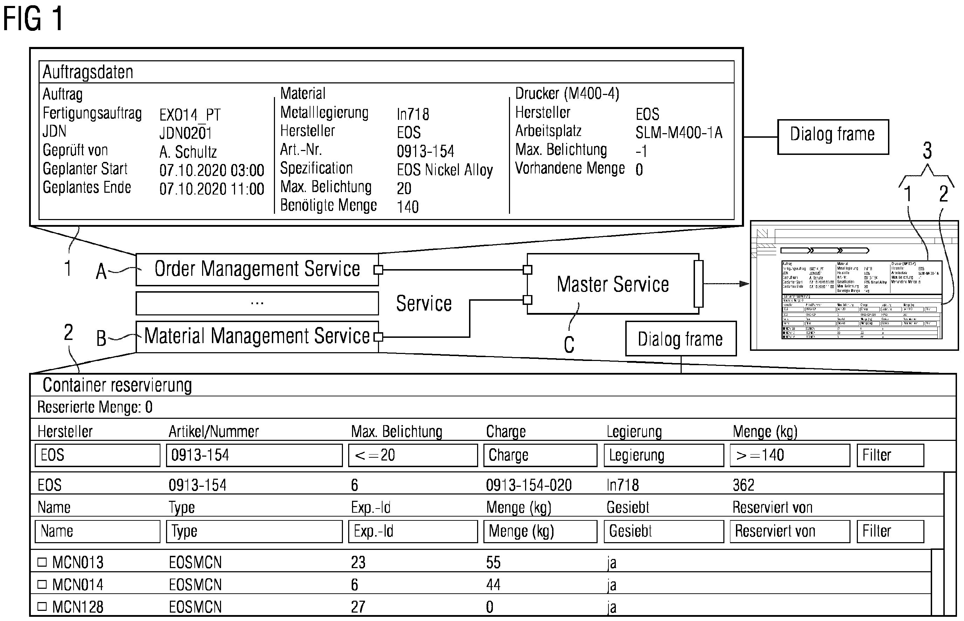

Fig. 1 shows the principles behind the invention. As an example, an application suite for Operator Guidance will be used which uses two software services (in the following text in short "services"), an order and a material service for additive manufacturing. The first one provides orders which defines print jobs for a selective laser melting process, the second one manages material (in our case metal powder) and container to store the material. Both services provide dialog frames, the first one a frame which shows the content of the order (order-id, needed powder and a printer type to be used), the second one allows to search for batches based on material requirements and to reserve material (a number of containers). Both frames will be combined to one dialog for an operator which has to search for appropriate batches and containers in the first step to prepare a print job. To do this, order information will be provided by the first service and used in the second service. Each software service can be connected with a hardware station or a machine fulfilling a complete task, a so-called automation module, in an industrial automation arrangement, here: an Additive Manufacturing System.

Data interfaces and data connections or data channels connect the control section of a software service with sensor or actor data or - on a abstracter level - with a control interface of the controlled automation modules. The automation modules usually have their own controller, e.g. a PLC, so that in these cases the software services provide high level control.

There might be other software services e.g. for administration, calculation or the like which might not serve to control any hardware or machine directly, but which might also be a software service with a "control part" and an monitoring or "UI part" like the others and which can be used as a software service as claimed in the inventive system and method as well.

Within Fig. 1, material specifications ("Artikelnummer", "Max. Belichtung", and "Menge" (the amount of material)) will be taken from the order and used to search for batches. If an appropriate batch could be found (here "0913-154-020"), a list of containers will be given which stores this kind of material and could be reserved to avoid that during the preparation of the printer somebody else would use these containers. Such a reservation can be reused for a variety of process steps, e.g. to reserve material for print jobs, sieving and mixing operations, etc.

It is assumed that the service will be responsible for a certain task and not to a certain object or class which means that the service for material management will be responsible to material and container types as well as appropriate instances (e.g. batches). This assumption is important to avoid performance problems for such suites. In case of using services for classes or single objects, a variety of web-based messages would be needed within application suites to manage this kind of data (e.g. to get formular data).

As a result, frames from services will manage more complex tasks instead of simple attributes and dialogs of the application suite will contain a limited number of such frames focusing on service data. This is not a restriction to build applications because normally dialogs will be designed in such a way that topics which belongs together will be placed together and not separated along the screen.

To combine frames from services for dialogs a variety of topics have to be solved:

Topic a): Dialog frames have to be adjusted to different sizes / dialogues.

To adjust frames to the available space in dialogs is a key requirement for this invention. It has to be avoided that for each use of such a frame the frame has to be modified including the data binding. If it is needed to modify such frames, it would not be possible to provide and (re-)use frames from a service library and frames could not be centrally maintained.

To make use of a responsive design is not sufficient for this case. Frames should be usable for desktops, tablets and mobile phones which means that in addition to a responsive design the content must be configurable to a certain degree due to the different screen sizes.

To do this dialog frames are defined in a text based YAML format which is an extension of Siemens' WinCC Unified format WinCCML. It defines the layout and the data binding of such frames. For each frame basis components will be provided to manage attributes like the management of PDF documents, pictures, 3D viewers or simple text values. Each component will be defined in the text format mentioned above. These different attributes could be grouped, and each group will get two kind of attributes to show/hide groups or to manage the responsive behavior of frames which means that the user is able to fix the order/sequence of basic components within a group.

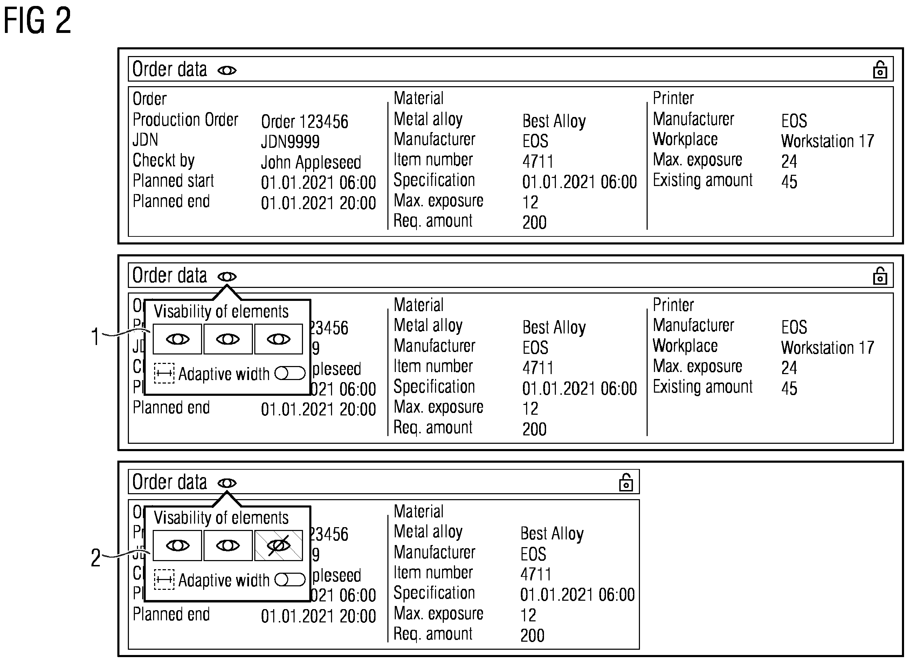

Fig. 2 demonstrates these principles. The upper picture in Fig. 2 shows a frame which contains three groups of data: order data, material, and printer. Each group contains several attributes which are managed by basis components as mentioned above. To reuse this frame for dialogs a configuration option will be offered (1) which allows to show or hide such groups (2). In the last picture, the group "printer" will be hidden. This option allows to reuse such dialogs for different screen sizes. Of course, dialogs have to be structured in such a way that this option makes sense.

In addition to this kind of configuration, a responsive behavior for such groups is supported as well. In this case the three groups will be named according to the reading direction. For example. in case of a read direction from left to right, order would be named 01_order, material 02material and printer 03_printer. If there is enough space, the three groups will be shown in one row, starting with 01_order. If space is limited to 2 groups, the third group will be placed below in a second row and so on. This is standard for a responsive design.

In case of arranging a dialog in a certain way which has to be fixed, another option will be provided to switch off this kind of responsive behavior. This option does not affect the resize of frames itself (e.g. distances between basis components), only the replacement of groups. It is assumed that this behavior could be used for the placement of basic components within groups as well and that the user could change the behavior on each level in a different way.

Finally, each frame will be defined in one YAML based file, but the specification allows to differentiate between three layout types: desktops, tablets and mobile phones within this file (of course these types could be extended if needed). It is assumed that a standard screen size for these three types could be used for the design of the frames. It is not needed to define individual screen sizes for each type of tablet, mobile phone or desktop. The frames will provide a standard responsive design to adjust distances between basis components or frames or to adjust font sizes which cannot be switch off or on. Therefore, only a subset of layouts to support different screen sizes is needed.

To adjust frames and basis components a special grid will be used which is common for all kind of screen sizes. Every component will be arranged based on the grid.

Topic b): Dialog frames need to get/set and exchange data of the different services.

Each service could run on different infrastructures (cloud resp. PCs or "edges" (Edge Devices)), so called computing devices, and could use a database of its own, e.g. relational, object oriented or time-based databases.

To make use of such services each software service must provide public communication interfaces. The same happens to the dialog frames to exchange data between frames and to trigger consecutive actions. A service is not allowed to access data of another service directly (e.g. using database calls).

Only the service itself (including the frames) can directly access the related database (e.g. using remote database calls) or other internal data, but can make data structures or variables available to other services or a master service via a data interface or an API or the like. An administration tool or service can help for connecting data structures, variables or the like of different software services and can help for connecting event channels between the software services and between the software services and external channels.

For this approach, the software services will support REST APIs to provide (public) APIs. Examples for such an API would be standard calls to create or modify objects (e.g. material types). In addition, frames will provide interfaces to set/get data within these frames and to trigger events. These interfaces could be used for a variety of features.

The following figures show two examples to make use of these features to show the flexibility of this approach:
a) Use of referenced attributes to manage standards in libraries.

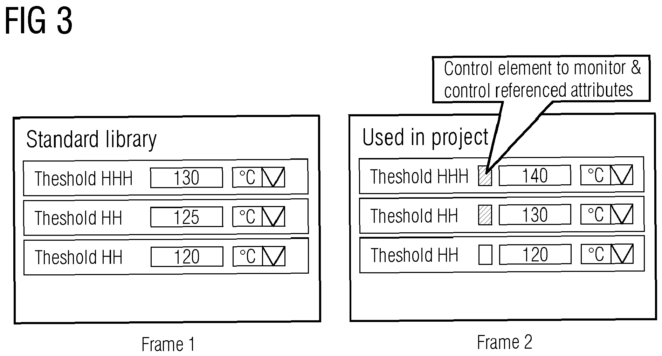

Fig. 3 demonstrates the use of referenced attributes. For process plants, piping & instrumentation diagrams will be used to derive control loops, e.g. to manage pressure or temperature values. Based on standard libraries for such loops, the loop will be engineered. To do this, thresholds for alarms have to be defined for different kind of threshold settings (high, high high and high high high). Within a standard library a certain setup will be defined for a certain sensor type as shown in the figure above. Based on this library settings, individual settings will be derived for the different loops within a project. Normally the settings will not have a reference back to the original library settings.

In our case a frame (1) within a service will define standard thresholds for a loop and provides interfaces to read these values. Another frame (2) will manage the settings of the loop within a project and will adjust the settings. Each threshold attribute will get a linkage back to the original library settings within frame (1) and a special control element (a colored button) will allow to visualize that there is a difference to the original settings. The button provides the possibility to switch back to the original value using the reference mentioned above. Therefore, this concept would provide an easy way to show differences between standard and configured elements and to switch back to the standard and vice versa. Of course, the button could be shown or suppressed depending on user roles. An operator does not need to know if there is a difference in the setting, but an application engineer who is responsible for the settings. Please note that frame (1) could be a hidden for the user. It is not necessary for this approach to visualize the original library frame.

Another example would be the use of referenced attributes across services for operator guidance systems. For additive manufacturing for example a variety of device dependent settings have to be made for print jobs but also some product specific settings. In case of using a CAM service to manage product specific settings and a device service for device specific settings, different frames have to be used which could be annoying. In this case a frame from the device service could be provided which contains references to the CAM service data (e.g. to decide which kind of coater or dose factor to use). As a result, the operator will get one sequence in one frame to do the preparation of print jobs.

b) Use of trigger events to highlight objects in different frames.

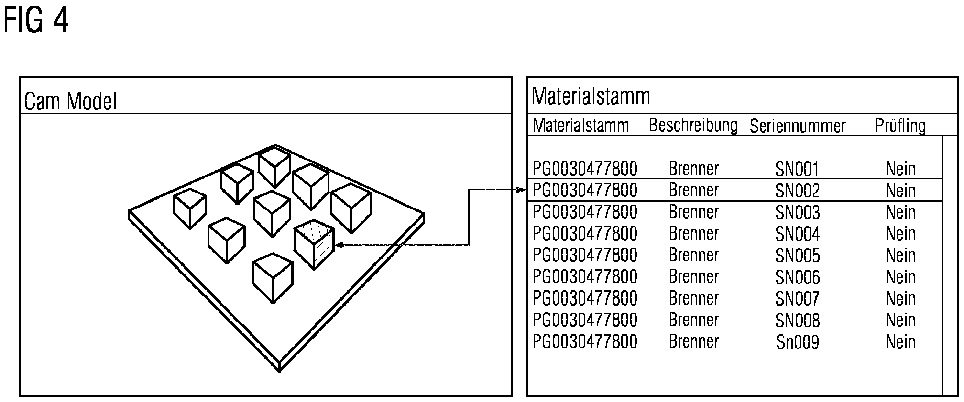

Fig. 4 illustrates trigger events between frames. Beneath the exchange of data, the behavior of frames have to be managed as well. To do this, the frames provide an interface which allows to select/deselect data within frames and to send information about selected objects. The example above shows such an example for additive manufacturing. A CAM Service provides a CAM model which contains several parts (left picture). Another frame for an ERP Service provides a table containing material master data for the different parts, including serial numbers of the parts. In case of selecting a part model in the 3D model, an event will be sent to the frame of the ERP service which contains the ID of the part. Based on the ID, the ERP frame highlights the selected part and the associated data. Of course, the opposite direction will be supported as well.

c. Dialog frames have to be managed within services and the application suite.

As mentioned above the different frames are defined in YAML based text files. For services there is a need to differentiate between internal and public frames and resulting dialogs. For dialogs the start screen and the navigation has to be defined. The definition is done in such a way that they could be used for the application suite as well. The application suite is defined as a master service.

To realize this approach, a text-based repository file has been defined which contains all information which is needed to setup the graphical user interface and to define the REST APIs for the service. The repository will contain version information about the service and the interfaces. The repository is text-based, similar to the frames, to allow a version management based on standard programs as an option.

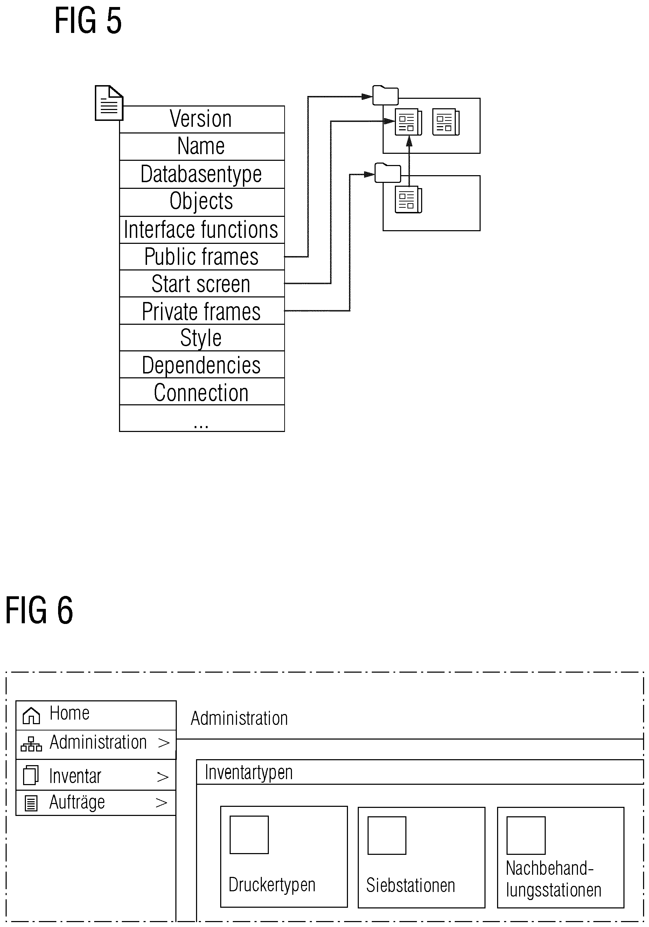

The following figures give an overview about the structure of the repository. Fig. 5 gives an example for a structure of the repository. The repository in general contains the following information:
- Version
   Version information about the service
- Name
   Name of the service.
- Data base type
   Type of the database used (relational, time-based, etc.). This information is needed for the editor to create/manage frames.
- Objects
   Definition of service objects with properties. Each service is responsible for a variety of objects, e.g. material types and batches. To make use of such objects (e.g. for references) from external services a public definition will be given.
- Interface functions
   Definition of service interface functions (e.g. to create, update, get service objects).
- Public frames
   List of frames to be used for the service.
- Private frames
   Private frames could be used for SW development or test purposes but not for productive purposes or within application suites. For example, private frames could be tables and forms directly related to tables of the database.
- Style
   A special frame will be defined which defines the default style for a given service.
- Start screen
   Defines the entry frame for the service.
- Dependencies
   In case of dependencies to other services related services will be identified in this entry. For example a schedule service for production orders needs to have an order service.
- Connections
   This entry contains relations to other services if supported.

The repository defines a rough description about which frames will be provided and which start screen will be used, but no details about the management of frames within the service (e.g. to assign frames to entries of navigation bars, etc.).

To manage these frames in a generic way, tags will be associated to each frame. A navigation frame will be configured in such a way that entries in the navigation frame (directories) will be associated to such tags. For an example, one entry defines the entry "administration" to define configurations and all object types needed in this service and will be associated to a tag "admin". Frames which will define such objects or configurations will get the same tag "admin". Based on the tag the entry will be filled with all associated frames. Another entry (e.g. "inventory") will manage all instances based on the object types, etc. For additive manufacturing this means that container types will be accessible by the first entry and the container instances by the second one.

Fig. 6 shows an example for such a navigation entry. A navigation bar is shown on the left side of the screen. The entry point "Administration" contains frames which are tagged according to this tag (in this case "Druckertypen" (printer types), "Siebstationen" (sieving stations), etc.). The different frames could be shown as sub-entries in the navigation bar or as tiles in an associated frame as shown above. If needed the frame containing the tiles could be edited in a manual way as well to optimize the layout.

Please note that entries in the repository for start screen / default style / public and private frame could be defined by tags as well. In our case a separate entry in the repository is used to get a faster access to these frames for performance reasons.

This kind of repository is used for application suites as well. In general, an application suite acts like a master service. The master service will get references to the repositories of the different services used within the suite. As mentioned, only public frames and interfaces from the services could be used within the suite.

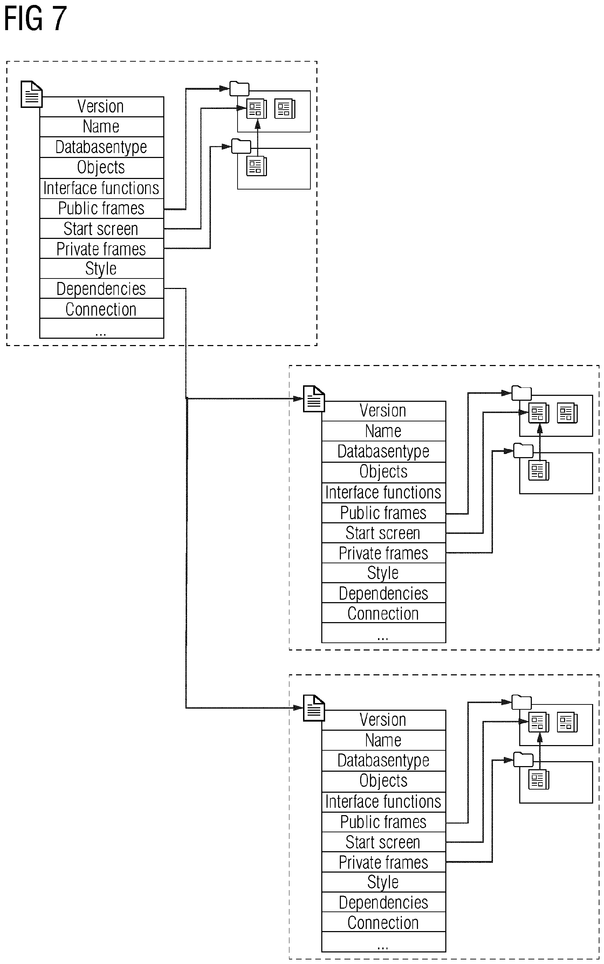

Fig. 7 shows the principles behind this approach, i.e. the use of repositories for application suites. On the right-hand side, two services are defined which have a repository of their own. In case of adding a service to a master service, the master service will add a reference to the repository of the service (within the entry "Dependencies"). The master defines a new start entry and could have a default style of its own which overrides the default style of the integrated services. This allows end-customer to customize the style to their requirements independent to the style of the services. Of course, this kind of configuration is limited, because the responsive design is fixed within the services but colors, fonts, etc. could be adapted to the needs of the end-customer.

The integration of services shows the advantages of the tag concept for frames. If each service provides tags to identify frames for object types and object instances, the master service could provide one entry for all kind of types and one entry for all kind of instances. Adding a new service implicitly updates a central navigation bar.

d. Object relations between services have to be provided and a generic navigation across services.

To support relations between services we have to differentiate between bidirectional and unidirectional relations. Bidirectional means that both services know which kind of objects have a relation, in case of unidirectional relations only one service manages this kind of relation.

The invention assumes that different services have to be combined which could have a database of their own (and the services could use different types of databases). To support relations in such a case, key attributes will be used to manage such relations. In every case (uni- or bidirectional relations) one master resp. one service will be defined who is responsible to create/update or delete such relations.

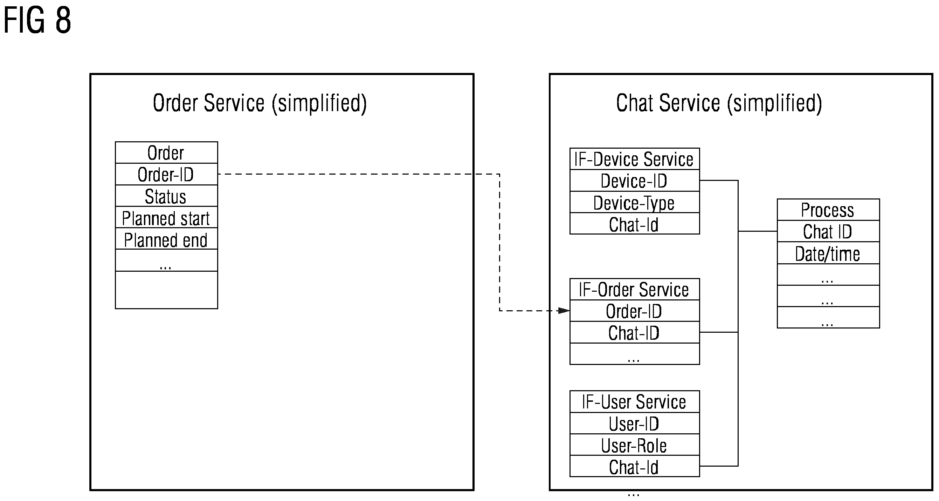

Fig. 8 shows the principle behind this approach. An order service and a chat service will get an (unidirectional) relation to ensure that chats could be assigned to orders. The chat service acts as a master for this kind of relation. Special interface tables will be used to manage such relations.

In the picture above, the interface table "IF_Order_Service" contains the key for an order and a chat object. This allows the chat service to search for all chats related to a certain order. Furthermore, based on the key information, the user would be able to navigate to a frame from the order service to show the appropriate data.

The interface tables are marked in a special way (in this example all tables start with "IF_") to differentiate these tables form the internal database tables of the service. In case of bidirectional relations both services will manage such tables.

To ensure the consistency between both services the system could use a 2-phase commit transaction across the databases. If inconsistencies happened the relations could be repaired based on the information of the master service. Of course, in case of using central databases the interface tables could be used to define database relations as well.

The repository of the service provides information about possible relations (including the type of relation) and which service will be the master (in the "connection" entry). The master repository will store the kind of relationship between service objects and the master information.

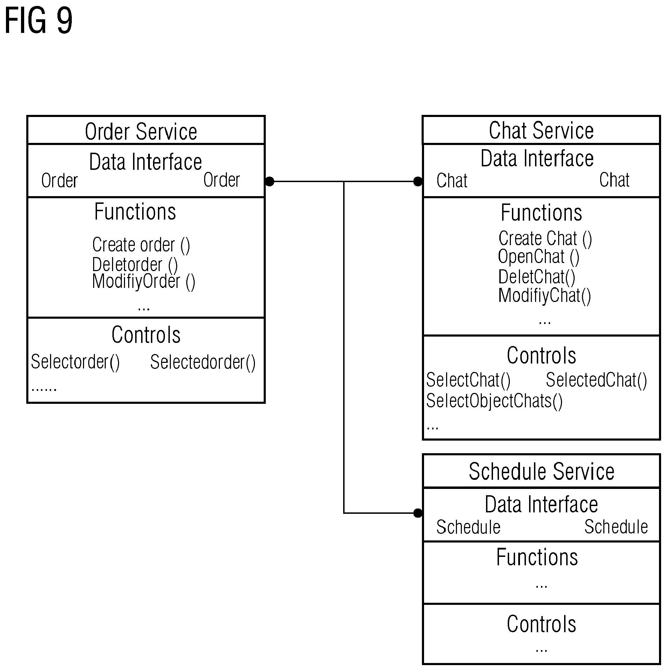

Based on this kind of information the master service will provide a generic navigation between services as shown in the Fig. 9. An order service which manages production orders is related to a chat service and a schedule service. The chat service allows to manage chats related to an order, the scheduler will schedule orders.

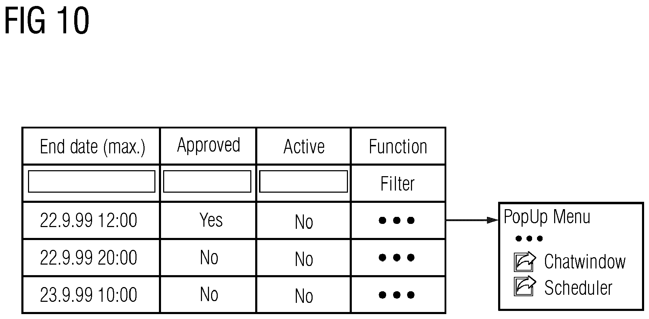

The order service provides a frame which shows all orders in a table. An excerpt for the generic navigation is given in Fig. 10 on the left-hand side. Each order could be selected and will get a control element "• • •". The control element opens a popup menu which allows to select methods from the order service and navigation entries to all related objects in other services.

These relations will get unique names which allows to associate frames to relations using the tag concept mentioned above. The popup menu will create one entry point for each relation defined in repository and associate all related frames to this entry point. If only one frame is tagged, the entry point will navigate directly to this frame. In case of navigating to the chat frame, the chat associated to that order will be opened (or a new created if it is the first chat). Implicitly the dialog will manage the relation between the chat and the order.

### Summary

This approach solves the problems mentioned at the beginning in the following way:
(1) Provide combinations of apps Services could run in the cloud, on edge devices and on site using standard PCs. The services allows end-users (manager of plants) to combine services within a master services depending on the used infrastructure of the plant.
(2) Reduce the complexity of industrial software applications
   - The invention provides a strict separation of concerns. Services provides a data repository and a graphical user interface of their own. It is possible to make use of common databases for services but even in this case, data structures will be strictly divided and assigned to services.
   - Edge based applications which are mostly device and technology oriented could be easily integrated by end-customers. If the device manufacturer provides services as described in this invention, these services could be integrated into suites without getting patent problems. If not, a wrapper could be used for integration tasks as well.
   - Application suites could grow step by step. For example, a simple MES system for selective laser melting (additive manufacturing) could provide in the first step a powder management. In the next step, processes and manual schedules will be added. The service architecture provides the possibility to add functions step by step.

Other services could be:
- Transport service to manage AGVs, delivery of goods, etc.
- Chat service
- Process monitoring applications
- Condition monitoring applications
- ...

Of course, such a service-oriented architecture has limitations regarding performance aspects compared to a classic implementation. But assuming that the services will be well-defined in such a way that they could manage certain tasks by their own, the performance of the system will not be an issue.

Please note that a web-based UI is assumed for this kind of invention due to the fact that cloud- and edge-based application have to be integrated and they have to use this kind of UI.

The invention allows to make use of stand-alone applications in application suites which could be extended step by step. Within the suite existing graphical user interfaces will be reused and combined in a central navigation. Furthermore services/applications could be added without the need to restart central servers. Each service could have a database of its own. The invention does not use "micro" services which focuses only on one object, it uses services which are able to manage more complex tasks (like a material management service) .

To support such features in a productive way, a variety of solutions have been derived to allow the reuse of dialogs on the one hand and a generic way to integrate these dialogs into an application suite:
- The invention supports configurable dialog frames to adjust frames to screen sizes. Without this feature a reuse of application dialogs will not be possible in a productive way. Each dialog would have to be adjusted to the new screen which means that it would be impossible to maintain/update such dialogs in a central way.
- Each service will get a repository which manages frames, dialogs, and available interfaces of services. An application suite acts like a master service and will get a repository as well. All frames and repositories are text based and allow a version management for services and frames. The system differentiates between public and private frames. Private frames cannot be used in application suites, only within the service itself. The central repository references to the repositories of the services which have been added and therefore public interfaces and frames from the services are implicitly known.
- Based on information in a central repository within the application suite, possible relations between objects of services will be known. This information is used to provide a generic navigation across services. The information can be derived by repository information from the services itselves, therefore a generic navigation can be supported. Adding a service implicitly allows to navigate along these relations.
- The system provides a possibility to create and manage relations between objects of different services even if services will have a database of their own. Services will store key attributes of objects from other services to manage such relations. The system supports unidirectional and bidirectional relations.

The approach shows a major difference to current suites. Currently, the integration of different SW applications/packages into a suite requires a harmonization of data repositories and a manual integration of user interfaces which have to be done by a development team. The set of usable packages is normally fixed to the packages offered from the supplier of the suite. Mostly this approach is a top-down approach, packages will be added step by step to a central application.

To integrate edge-based applications into suites, a bottom up approach is needed to combine different apps into a suite and related context information. The invention provides features to add such application by end-users without the need of a development team.

An alternative for web developments would be the use of so-called iframes which allows to show the Web-based user interface of an application in the context of an HTML page. But in this case, context information has to be transferred on an application level in addition and the application which has to be integrated must be programmed in such a way that this transfer is possible. There is no generic architecture to navigate to applications and there is no support to reuse/configure iframes to different layouts.

## Claims

1. System for programming and controlling of a modular industrial automation arrangement,
the industrial automation arrangement comprising multiple automation modules, each module fulfilling an automation task, the automation arrangement comprising at least one computing device for controlling and monitoring of the automation arrangement,
**characterized in**,
• each automation module being controlled and monitored by a software service (A, B), each software service (A, B) having a first communication interface to a data connection to that automation module for exchanging sensor and actor data,
• each software service (A, B) providing control software with functions for controlling the automation task,
• each software service (A, B) also providing or describing at least one dialog element (1, 2) for user interaction, at least one of the functions being communicatively connected with the at least one dialog element (1, 2),
• each software service (A, B) having or accessing its own assigned data repository,
• each software service (A, B) having a second interface for exchanging data and for accessing or triggering of internal functions or service with others of the software services (A, B),
• each software service (A, B) being deployed on the computing device,
• the computing device having an execution environment for execution of the software service (A, B),
• the system having an administration service being set-up for controlling of the execution of the software services (A, B) in the execution environment, and
• the computing device providing a graphical user interface, the graphical user interface integrating some or all dialog elements (1, 2) of the multiple software services (A, B) in one or multiple common views, frames, or screens (3).

2. A system according to claim 1,
**characterized in**
the administration service having first editing functions, the first editing functions assisting in editing the connection between interfaces of the software services (A, B) and between the interfaces and external data connections.

3. A system according to claim 1 or 2,
**characterized in**
the graphical user interface having second editing functions, the second editing functions assisting in combining and editing dialog functions of the loaded software services (A, B) in the common views, frames, or screens.

4. System according to one of claims 1 to 3,
**characterized in**
the computing device is an industrial edge device.

5. System according to one of claims 1 to 3,
**characterized in**
the computing device is a cloud-based execution environment, the cloud-based execution environment having at least one data connection to the automation modules and at least one data connection to a displaying device for displaying the one or multiple common views, frames, or screens.

6. System according to one of the preceding claims,
**characterized in**
**that** the computing device has or is connected to a webserver for providing the one or multiple common views, frames, or screens displaying device, and that the displaying device comprises a browsing software connected to that webserver.

7. System according to one of the preceding claims,
**characterized in**
**that** the administration service is set-up for providing access to at least one repository with multiple packages with software services (A, B) and being set-up for selecting, loading, combining, and for establishing data access and transfer between the second interfaces of the software services (A, B).

8. System according to one of the preceding claims,
**characterized in**
a master service (C), the master service being set-up for establishing and controlling of a workflow through the software services (A, B) in the runtime environment, the workflow reflecting a production sequence in the industrial automation arrangement.

9. Method for programming and controlling of a modular industrial automation arrangement,
the industrial automation arrangement comprising multiple automation modules, each module fulfilling an automation task, the automation arrangement comprising at least one computing device for controlling and monitoring of the automation arrangement,
**characterized in**,
• each automation module is controlled and monitored by a software service (A, B), each software service (A, B) exchanging, via a first communication interface to a data connection to that automation module, sensor- and actor data,
• each software service (A, B) provides control software with functions for controlling the automation task,
• each software service (A, B) also provides or describes at least one dialog element (1, 2) for user interaction, at least one of the functions being communicatively connected with the at least one dialog element,
• each software service (A, B) has or accesses its own assigned data repository,
• each software service (A, B) employs a second interface exchanging data and accessing or triggering of internal functions or service with others of the software services (A, B),
• each software service (A, B) is deployed on the computing device,
• the computing device employing an execution environment for execution of the software service (A, B),
• the system employing an administration service being set-up for controlling of the execution of the software services (A, B) in the execution environment, and
• the computing device provides a graphical user interface, the graphical user interface integrating some or all dialog elements (1, 2) of the multiple software services (A, B) in one or multiple common views, frames, or screens (3).
